# EUROPÄISCHE PATENTSCHRIFT

(11) **EP 1 371 787 B1**
(45) Veröffentlichungstag und Bekanntmachung des Hinweises auf die Patenterteilung: **14.12.2005**
(21) Anmeldenummer: 03405407.2
(22) Anmeldetag: 05.06.2003
(51) Int. Cl.: E03D 1/32

(54) **Einlaufgarnitur für einen Spülkasten**
Fill valve for a cistern
Garniture d'arrivée d'eau pour un reservoir de chasse

(30) Priorität: 13.06.2002 US 171483
(43) Veröffentlichungstag der Anmeldung: 17.12.2003
(73) Patentinhaber: GEBERIT TECHNIK AG, 8645 Jona (CH)
(72) Erfinder: Wey, Paul, 8733 Eschenbach (CH)
(74) Vertreter: Groner, Manfred

(56) Entgegenhaltungen:
- EP-A- 0 369 404
- EP-A- 0 688 987
- WO-A-00/68604
- WO-A-01/98592
- AU-B- 459 533
- DE-A- 2 241 763
- US-A- 4 345 619
- US-A- 6 155 288

## Beschreibung

Die Erfindung betrifft eine Einlaufgarnitur für einen Spülkasten nach dem Oberbegriff des Anspruchs 1.

Durch die AU 459 533 B ist eine Einlaufgarnitur für einen Spülkasten bekannt geworden; die einen Wasserführungskanal aufweist, der zu einem Schwimmer gesteuerten Membranventil führt. Dieses Ventil ist seitlich am Gehäuse der Garnitur angeordnet. Wird zum Füllen des Spülkastens das Membranventil geöffnet, strömt das Wasser in eine Ventilkammer und nach dem Ventilsitz in Gegenstromrichtung nach unten in einen nach unten führenden Kanal nach unten und wird an einem Boden nach oben umgelenkt und steigt in einem zylindrischen Rohr zu einem oben angeordneten Ausgang, wo das Wasser in den Spülkasten fliesst. Bei diesem Einlaufventil dürfte die Geräuschbildung beim Einströmen des Wassers vergleichsweise hoch sein.

Eine weitere Einlaufgarnitur ist im Stand der Technik aus der US 6,155,288 bekannt geworden. Diese wird an einem Einlaufstutzen mit dem Boden des Spülkastens verbunden und weist ein schwimmergesteuertes Membranventil auf. Nach einem Spülvorgang fällt ein Schwimmer nach unten und öffnet über das Servoventil das Membranventil. Bei geöffnetem Membranventil strömt Wasser vertikal nach oben zum Ventilsitz des Membranventils, das sich in einer horizontalen Ebene befindet. Nach dem Ventilsitz wird das Wasser über ein Kanalsystem nach unten in den Spülkasten geleitet und füllt diesen wieder auf. Ein Teil des Wassers wird nach dem Ventilsitz über eine Leitung zum Siphon der WC-Schüssel geleitet um diesen wieder aufzufüllen. Ein solches Nachfüllen des Siphons ist bei sogenannten Absaugesiphons erforderlich. Dies ist beispielsweise in der US 5,594,959 näher erläutert. Eine weitere Einlaufgarnitur ist auch aus der US 5,623,961 bekannt geworden. Das Membranventil ist am oberen Ende eines Gehäuses angeordnet. Das Wasser strömt bei geöffnetem Membranventil vertikal nach oben zu der in einer horizontalen Ebene angeordneten Membran und strömt in einer horizontalen Ebene radial nach aussen und in einem Kanalsystem vertikal nach unten in den Spülkasten um diesen nachzufüllen. Zum Nachfüllen des Siphons ist am Gehäuse ein Stutzen angeordnet und über diesen fliesst ein Teil des Wassers in den Siphon.

Der Erfindung liegt die Aufgabe zugrunde, eine Einlaufgarnitur der genannten Art zu schaffen, die ein geräuscharmes Nachfüllen des Spülkastens ermöglicht. Die Aufgabe ist gemäss Anspruch 1 gelöst. Es ist eine weitere Aufgabe der Erfindung, eine Einlaufgarnitur der genannten Art zu schaffen, die bei kleinerer Bauhöhe ein Nachfüllen eines Absaugesiphons ermöglicht. Es ist eine weitere Aufgabe der Erfindung, eine Einlaufgarnitur der genannten Art zu schaffen, mit der wirksam ein Rückfluss bei einem Unterdruck in der Zuführleitung verhindert werden kann und die trotzdem einfach im Ausbau ist.

Bei der erfindungsgemässen Einlaufgarnitur ist das Membranventil seitlich am Gehäuse angeordnet. Das vertikal nach oben in das Gehäuse einströmende Wasser wird um 90° umgelenkt und strömt horizontal zum Ventilsitz des Membranventils. Die seitliche Anordnung des Membranventils ermöglicht eine wesentlich niedrigere Bauhöhe der Einlaufgarnitur.

Ein besonderes geräuscharmer Einlauf wird dadurch erreicht, dass das Wasser nach dem Ventilsitz in einen Rotationsraum strömt, der sich in einer horizontalen Ebene erstreckt. Das Wasser strömt tangential in diesen Rotationsraum.

Nach einer Weiterbildung der Erfindung sind im Rotationsraum Mittel zur Rückflussverhinderung bei einem Unterdruck angeordnet. Diese sind vorzugsweise so ausgebildet, dass bei geöffnetem Membranventil der Rotationsraum zum Einleiten von Spülwasser geöffnet ist. Bei einem Lufteinlass ist diese Rotation hingegen abgedichtet, sodass kein Wasser vom Spülkasten in die Leitung gelangen kann. Die Mittel sind nach einer bevorzugten Ausführung als Klappe ausgebildet. Diese ist nach einer Weiterbildung der Erfindung mit einem Deckel am Gehäuse befestigt. Diese ermöglicht eine besonders einfache Montage und Revision.

Weitere vorteilhafte Merkmale ergeben sich aus den äbhängigen Patentansprüchen, der nachfolgenden Beschreibung sowie der Zeichnung.

Ein Ausführungsbeispiel der Erfindung wird nachfolgend anhand der Zeichnung näher erläutert. Es zeigen:
- Figur 1: ein Schnitt durch eine erfindungsgemässe Einlaufgarnitur,
- Figur 2: eine räumliche Ansicht der Einlaufgarnitur,
- Figur 3: eine Aufsicht auf die Einlaufgarnitur,
- Figur 4: ein Teilschnitt entlang der Linie IV - IV der Figur 3,
- Figur 5: ein Schnitt durch das Gehäuse der Einlaufgarnitur,
- Figur 6: ein Schnitt entlang der Linie VI - VI der Figur 5,
- Figur 7: ein Schnitt entlang der Linie VII - VII der Figur 5,
- Figuren 11 bis 13: Schnitte durch den oberen Teil der Einlaufgarnitur zur Beschreibung der Funktion der Mittel zur Rückflussverhinderung,
- Figur 8: eine Ansicht der Klappe,
- Figur 9: ein Schnitt entlang der Linie VIIII - VIIII der Figur 8 und

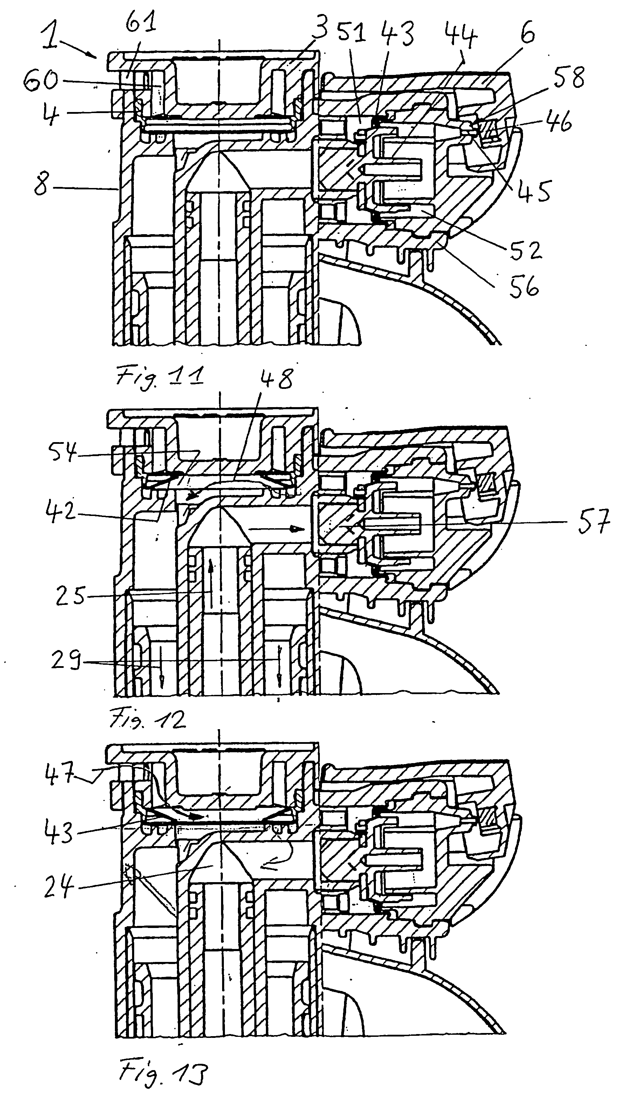

- Figur 10: eine räumliche Ansicht der Klappe

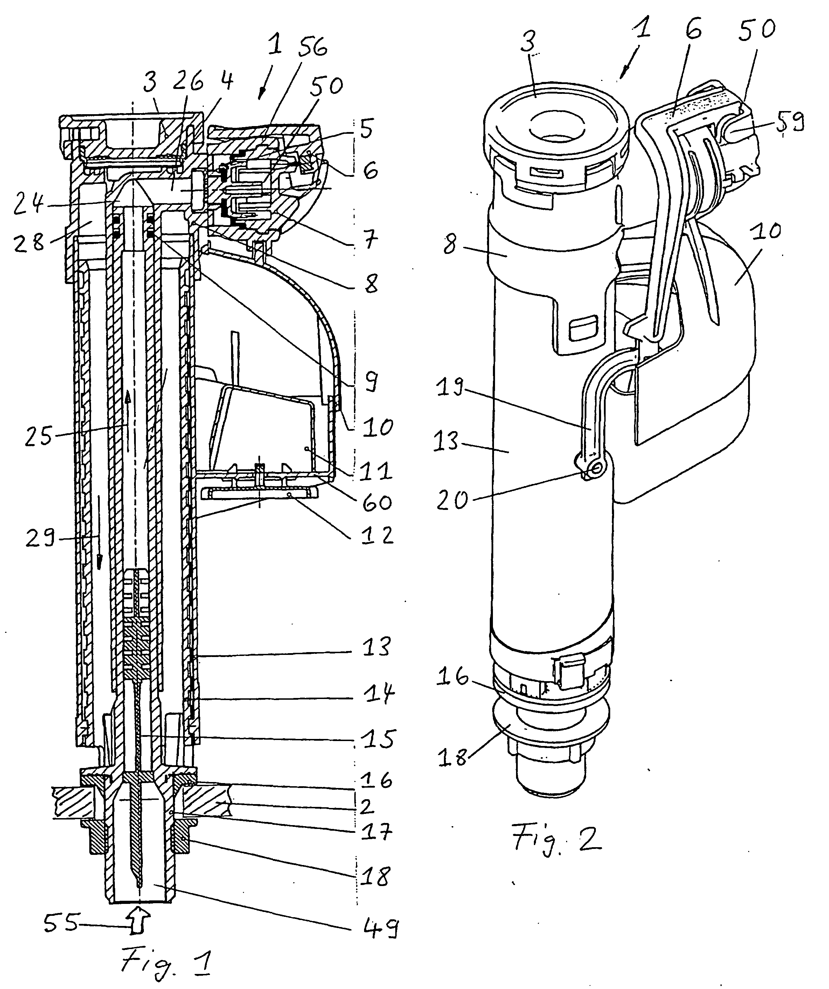

Die in den Figuren 1 und 2 gezeigte Einlaufgarnitur 1 ist an ihrem unteren Ende mit einer Dichtung 16 sowie einer Mutter 18 am Boden 2 eines sonst weiter nicht gezeigten Spülkastens befestigt. Die Einlaufgarnitur 1 ist an einem Einlass 49, der auf der Unterseite des Bodens 2 vorragt an einer hier nicht gezeigten Wasserleitung angeschlossen. Die Zufuhr von Wasser erfolgt in Richtung des Pfeils 55.

Die Einlaufgarnitur 1 weist ein Gehäuse 8 auf, das vorzugsweise aus Kunststoff hergestellt ist und das einen vertikal verlaufenden Kanal 24 besitzt, in das von unten ein Einlassrohr 17 eingesetzt ist. In diesem Einlassrohr 17 befindet sich ein Filter 15, mit dem feste Bestandteile des Wassers zurückgehalten werden. Das am Einlass 49 in das Einlassrohr 17 einströmende Wasser gelangt durch den Filter 15 vertikal nach oben, wie dies in Figur 1 durch den Pfeil 25 angedeutet ist. Mit Dichtungsringen 9 ist das Einlassrohr 17 gegenüber dem Gehäuse 8 abgedichtet.

Das Einlassrohr 17 bildet einen Kanal 24, der an seinem oberen Ende in einen Kanal 26 führt, der sich horizontal erstreckt und der in einen Stutzen 56 führt, in welchem ein Membranventil 50 eingesetzt ist.

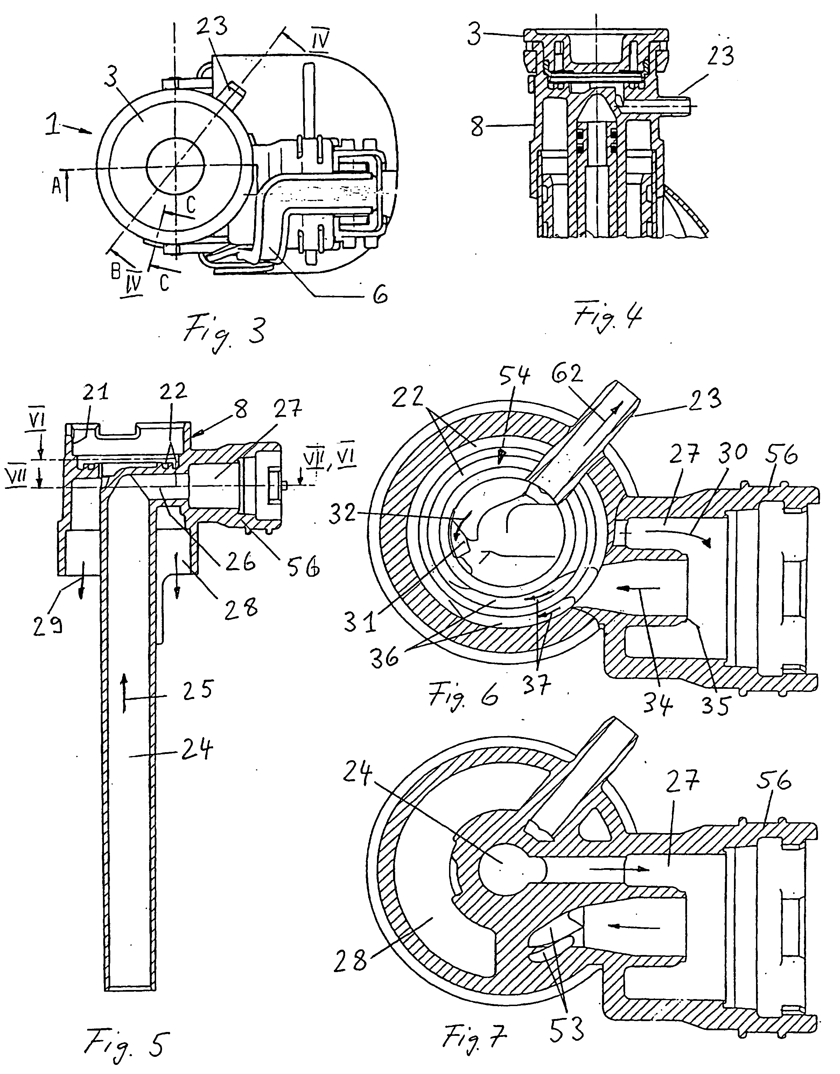

Das Membranventil 50 besitzt eine Membran 43, die mit einem Ventilsitz 35 (Figur 6) zusammenarbeitet. Die Membran 43 besitzt in an sich bekannterweise einen hier nicht gezeigten Durchgang, der einen ersten Raum 51 vor der Membran 43 mit einem Raum 52 hinter der Membran 43 verbindet. Bei geschlossenem Ventil ist damit der Druck im Raum 51 gleich gross wie der Druck im Raum 52. Da die Fläche des Verschlusskörpers (Figur 12) im Raum 52 grösser ist als im Raum 51, wird der Verschlusskörper 57 aufgrund der Druckdifferenz an den Ventilsitz 35 angepresst.

Zur Betätigung des Membranventils 50 ist ein Servoventil 58 vorgesehen, das einen Durchgang 45 zum Raum 52 sowie einen Dichtungskörper 46 aufweist, der an einem Hebel 6 befestigt ist. Dieser Hebel 6 ist gemäss Figur 2 um eine horizontale Achse 59 verschwenkbar und mit einem Schwimmer 11 verbunden, der unterhalb einer Schwimmerhaube 10 angeordnet ist. Ist der Spülkasten mit Wasser gefüllt, so erfährt der Schwimmer 11 einen Auftrieb und dieser wirkt über einen Hebel 19 auf den Hebel 6 in der Weise, dass der Dichtungskörper 46 an den Durchlass 45 angepresst wird und diesen schliesst. Ein Steuerschwimmer 12 erfährt ebenfalls einen Auftrieb und liegt an einem Becher 60 an. Sinkt das Wasserniveau im Spülkasten, so fällt der Steuerschwimmer 12 nach unten und der Becher 60 entleert sich. Gleichzeitig sinkt der Schwimmer 11 nach unten und verschwenkt den Hebel 19 um eine horizontale Achse 20 sowie den Hebel 6, sodass sich der Dichtungskörper 46 von der Öffnung 45 abhebt. Dadurch sinkt der Druck im Raum 52 und demzufolge hebt der Verschlusskörper 57 (Figur 12) vom Ventilsitz 35 ab. Das Membranventil 50 ist damit geöffnet.

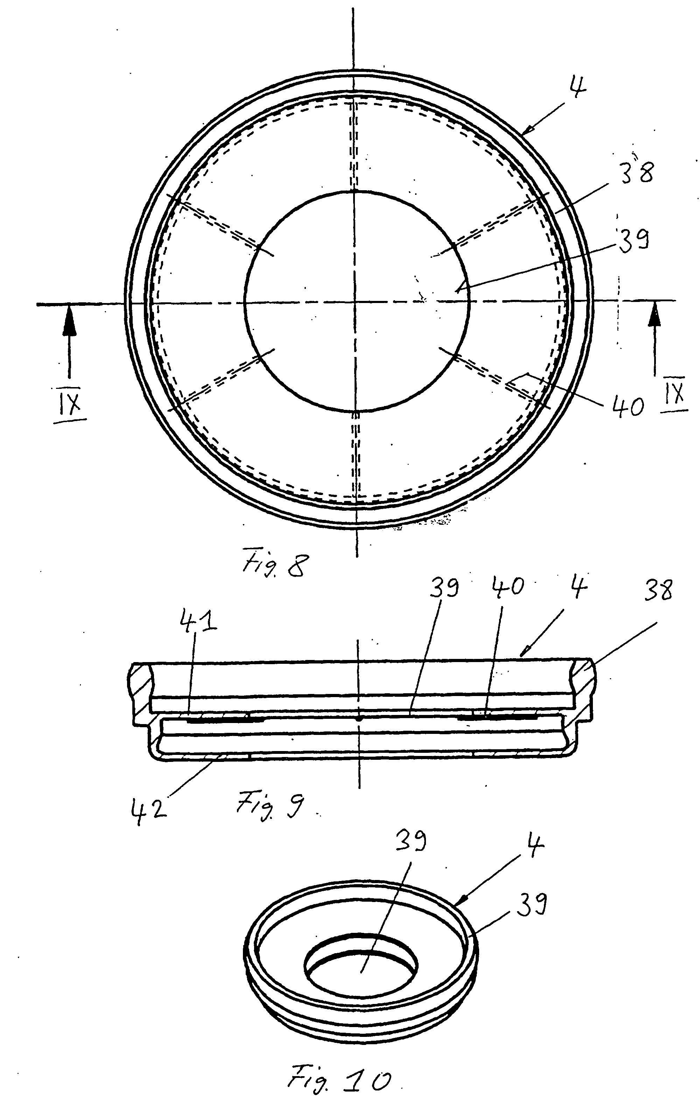

Der Raum 51, der ringförmig ausgebildet ist und in einer vertikalen Ebene liegt, ist gemäss den Figuren 6 und 7 durch eine Ausnehmung 27 gebildet, in welcher etwa mittig der Ventilsitz 35 angeordnet ist. Dieser befindet sich ebenfalls in einer vertikalen Ebene. Bei geöffnetem Membranventil 50 strömt das Wasser gemäss Figur 6 in Richtung des Pfeiles 30 in den Raum 27. Weiter gelangt das Wasser am Ventilsitz 35 vorbei und in Richtung des Pfeiles 34 durch Kanäle 53 nach oben in einen Rotationsraum 54, der zwei kreisförmige nach oben offene Rillen 36 besitzt. Das Wasser strömt somit durch die Kanäle 53 schräg nach oben und tangential in den Rotationsraum 54 bzw. in die Rillen 22. In den Rillen 22 befindet sich gemäss Figur 6 Durchgänge 36, die durch die Kanäle 53 gebildet sind. Dieser tangentiale Einlass bewirkt eine Rotation des Wassers im Rotationsraum 54, was strömungstechnisch vorteilhaft ist. Insbesondere können damit Geräusche vermieden werden.

Das Gehäuse 8 besitzt gemäss Figur 5 oberseitig eine Ausnehmung 21, in die eine Klappe 4 und ein Deckel 5 herausnehmbar eingesetzt sind. Die Klappe 4 wird mit dem Deckel 3 im Gehäuse 8 festgeklemmt. Sie ist aus einem gummielastischem Material hergestellt und gemäss den Figuren 8 bis 10 ausgebildet. Wie ersichtlich, ist die Klappe 4 ringförmig ausgebildet und besitzt zu ihrer dichten Befestigung einen Rand 38 sowie einen mittigen Durchgang 39. Der Durchgang 39 wird durch zwei Lippen'41 und 42 gebildet, die im Abstand zueinander am Rand 38 angeformt sind und jeweils eine Dichtungsmembran bilden. Die Lippe 41 ist durch radiale Rippen 40 verstärkt. Bei geschlossenem Membranventil 50 verschliesst die Lippe 41 einen Ringraum 60, der im wesentlichen durch den Deckel 3 und das Gehäuse 8 gebildet ist und der gemäss Figur 11 bei einer seitlichen radialen Öffnung 61 mit der Umgebungsatmosphäre verbunden ist. In der Grundstellung gemäss Figur 11 dichtet die Lippe 41 den Ringraum 60 unterseitig ab. Die untere Lippe 42 überdeckt gemäss Figur 11 in der Grundstellung die Rillen 22 und dichtet diese gegen oben ab. Ist hingegen das Ventil geöffnet, so wird die gummielastische Lippe 42 gemäss Figur 12 von den Rillen 22 angehoben, sodass sich der Rotationsraum 54 bildet und Wasser gemäss Figur 12 in Richtung des Pfeiles 48 in einen Kanal 28 gelangt, der konzentrisch zum Einlaufrohr 17 verläuft. In diesem strömt das Wasser vertikal nach unten, wie dies in Figur 12 durch die Pfeile 29 angedeutet ist. Im Rotationsraum 54 rotiert das Wasser gemäss Figur 6 zunächst in Umfangsrichtung gemäss den Pfeilen 37 und gelangt dann in Richtung des Pfeiles 32 in einen Durchgang 31 und schliesslich in den Kanal 28. Der Ringraum 60 ist hierbei weiterhin durch die Lippe 41 verschlossen. Im Fall eines Unterdruckes in der Wasserzuführung, gelangt Luft gemäss Figur 13 in Richtung des Pfeiles 47 durch die Öffnung 21 und in den Ringraum 60. Durch die angezogene Luft wird die Lippe 41, wie in Figur 13 gezeigt, nach unten geklappt und damit wird der Ringraum 60 mit dem Kanal 28 verbunden. Damit erfolgt ein Unterbruch in der Wasserführung und im Spülkasten befindliches Wasser kann damit nicht in das Einlaufrohr 17 gesogen werden. Die Verhinderung eines solchen Rückflusses von Spülwasser ist erforderlich, um eine Verschmutzung des Leitungswassers zu verhindern. Die Klappe 4 erfüllt diese Bedingung mit vergleichsweise einfachem Aufwand. Die Klappe 4 kann in einfacher Weise durch Abnehmen des Deckels 3 ausgetauscht werden. Ebenfalls ist nach dem Abheben des Deckels 3 das Gehäuse 8 von oben zugänglich und kann gereinigt werden.

Am Gehäuse 8 ist ein Stutzen 23 angeformt, der bei geöffneten Membranventil 50 mit dem Rotationsraum 54 verbunden ist. Ist das Membranventil 50 geöffnet, so gelangt ein Teil des Wassers, das im Rotationsraum 54 rotiert, durch den Stutzen 23 in Richtung des Pfeils 62 (Figur 6) in eine hier nicht gezeigte Leitung, durch welche dieses Wasser in den hier nicht gezeigten Siphon der Klosettschüssel gelangt. Dadurch wird der Siphon nachgefüllt, der beim Absaugvorgang geleert wurde. Bei geöffnetem Ventil wird somit ausser dem Spülkasten auch der Siphon der Klosettschüssel nachgefüllt. Der Stutzen 23 ist lediglich im Fall eines Absaugesiphons erforderlich.

## Patentansprüche

1. Einlaufgarnitur für einen Spülkasten, mit einem Gehäuse (8), das einen vertikal verlaufenden Wasserführungskanal (24) aufweist, der von einem am Spülkastenboden (2) zu befestigenden Einlass (49) zu einem schwimmergesteuerten Membranventil (50) führt, dessen Membran (43) einen Durchgang für den Druckausgleich zwischen einem ersten Raum (51) vor der Membran (43) und einem zweiten Raum (52) hinter der Membran (43) aufweist und mit einem Servoventil (58) zur Betätigung des Membranventils (50), wobei das Membranventil (50) seitlich am Gehäuse (8) angeordnet ist, wobei der erste Raum (51) ein sich in einer vertikalen Ebene erstreckender und seitlich am Gehäuse (8) angeordneter Raum ist, **dadurch gekennzeichnet, dass** der erste Raum (51) ein Ringraum ist und dieser in einen sich nach oben erstreckenden Kanal (53) führt und dieser Kanal (53) tangential in einen sich in einer horizontalen Ebene erstreckenden Rotationsraum (54) führt.

2. Einlaufgarnitur nach Anspruch 1, **dadurch gekennzeichnet, dass** der Wasserführungskanal (24) an einem oberen Ende in einen sich horizontal erstreckenden Durchgang (26) führt.

3. Einlaufgarnitur nach Anspruch 1 oder 2, **dadurch gekennzeichnet, dass** der Rotationsraum (54) wenigstens eine ringförmige und nach oben offene Rille (22) aufweist.

4. Einlaufgarnitur nach Anspruch 1, **dadurch gekennzeichnet, dass** im Rotationsraum (54) Mittel (4) zur Rückflussverhinderung bei Unterdruck angeordnet sind.

5. Einlaufgarnitur nach Anspruch 4, **dadurch gekennzeichnet, dass** die Mittel (4) zur Rückflussverhinderung eine bewegliche Lippe (41) aufweisen, welche in der Grundstellung einen nach aussen offenen weiteren Ringraum (60) unterseitig verschliesst.

6. Einlaufgarnitur nach Anspruch 4, **dadurch gekennzeichnet, dass** die Mittel (4) zur Rückflussverhinderung eine bewegliche Lippe (42) aufweist, welche bei geschlossenem Membranventil (50) und im Fall eines Unterdruckes den Rotationsraum (54) verschliesst.

7. Einlaufgarnitur nach Anspruch 4, **dadurch gekennzeichnet, dass** die Mittel (4) zur Rückflussverhinderung als Klappe ausgebildet sind, die bei geöffnetem Membranventil (50) den Rotationsraum (54) nach aussen verschliesst.

8. Einlaufgarnitur nach Anspruch 4, **dadurch gekennzeichnet, dass** die Mittel (4) zur Rückflussverhinderung ringförmig mit einem mittigen Durchgang (39) ausgebildet sind.

9. Einlaufgarnitur nach Anspruch 4, **dadurch gekennzeichnet, dass** die Mittel (4) zur Rückflussverhinderung mit einem Deckel (3) am Gehäuse (8) befestigt sind.

10. Einlaufgarnitur nach einem der Ansprüche 1 bis 9, **dadurch gekennzeichnet, dass** der Rotationsraum (54) bei geöffnetem Membranventil (50) mit einem Stutzen (23) verbunden ist, der an eine Leitung zum Nachfüllen eines Siphons verbindbar ist.

11. Einlaufgarnitur nach einem der Ansprüche 1 bis 10, **dadurch gekennzeichnet, dass** nach dem Rotationsraum (54) in Strömungsrichtung gesehen ein ringförmiger Auslaufkanal (28) angeordnet ist.

12. Einlaufgarnitur nach Anspruch 11, **dadurch gekennzeichnet, dass** der Auslaufkanal (28) konzentrisch zu einem Einlaufrohr (17) angeordnet ist.

## Claims

1. A fill valve assembly for a flush tank, having a housing (8) that incorporates a vertical water-carrying channel (24) that leads from an inlet (49) that is to be fastened on the flush tank bottom (2) to a float-controlled diaphragm valve (50) that incorporates in the diaphragm (43) a passage for the pressure equalization between a first chamber (51) in front of the diaphragm (43) and a second chamber (52) behind the diaphragm (43), and having a pilot valve (58) for actuating the diaphragm valve (50), wherein the diaphragm valve (50) is disposed laterally on the housing (8), wherein the first chamber (51) extends in a vertical plane and is disposed laterally on the housing (8), **characterized in that** the first chamber (51) is an annular chamber extending into an upwardly extending channel (53) and leads longitudinally into the rotation chamber (54), which extends in a horizontal plane.

2. A fill valve assembly according to claim 1, **characterized in that** the water-carrying channel (24), at an upper end, leads into horizontal passage (26).

3. A fill valve assembly according to any of claims 1 or 2, **characterized in that** the rotation chamber (54) has at least one annular groove (22) that is open towards the top.

4. A fill valve assembly according to claim 1, **characterized in that** means (4) to prevent a backflow in case of a negative pressure are disposed in the rotation chamber (54).

5. A fill valve assembly according to claim 4, **characterized in that** the means (4) to prevent a backflow incorporate a flexible lip (41) which, in its initial position, seals from the bottom an annular chamber (60) that is open towards the outside,

6. A fill valve assembly according to claim 4, **characterized in that** the means (4) to prevent a backflow incorporates a flexible lip (42) that closes the rotation chamber (54) when the diaphragm valve (50) is closed and a negative pressure exists,

7. A fill valve assembly according to claim 4, **characterized in that** the means (4) to prevent a backflow are designed as a flap that closes the rotation chamber (54) to the outside when the diaphragm valve (50) is open.

8. A fill valve assembly according to claim 4, **characterized in that** the means (4) to prevent a backflow are designed annular with a centrical passage (39).

9. A fill valve assembly according to claim 4, **characterized in that** the means (4) to prevent a backflow are fixed on the housing (8) by means of a cover (3).

10. A fill valve assembly according to any of claims 1 through 9, **characterized in that** when the diaphragm valve (50) is open, the rotation chamber (54) is connected to a connection piece (23), which is to be connected to a pipe for refilling a trap.

11. A fill valve assembly according to any of claims 1 through 10, **characterized in that** an annular outlet channel (28) is disposed downstream from the rotation chamber (54).

12. A fill valve assembly according to claim 11, **characterized in that** the outlet channel (28) is disposed coaxially to an inlet pipe (17).

## Revendications

1. Vanne d'arrivée d'eau pour un réservoir de chasse, comportant un boîtier (8), qui possède un canal vertical (24) de guidage de l'eau, qui s'étend depuis une entrée (49) devant être fixée sur le fond (2) du réservoir de chasse jusqu'à une soupape à membrane (50) commandée par un flotteur et dont la membrane (43) comporte un passage pour l'équilibrage de pression entre une première chambre (51) en avant de la membrane (43) et une seconde chambre (52) en arrière de la membrane (43), et comportant une servosoupape (58) pour actionner la soupape à membrane (50), dans lequel la soupape à membrane (50) est disposée latéralement sur le boîtier (8), la première chambre (51) étant une chambre qui s'étend dans un plan vertical et est disposée latéralement sur le boîtier (8), **caractérisée en ce que** la première chambre (51) est une chambre annulaire et cette chambre débouche dans un canal (53) qui s'étend vers le haut et ce canal (53) aboutit tangentiellement dans une chambre de rotation (54) qui s'étend dans un plan horizontal.

2. Vanne d'arrivée d'eau selon la revendication 1, **caractérisé en ce que** le canal (24) de guidage de l'eau débouche, au niveau d'une extrémité supérieure, dans un passage horizontal (26).

3. Vanne d'arrivée d'eau selon la revendication 1 ou 2, **caractérisée en ce que** la chambre de rotation (54) comporte au moins une rainure (22) de forme annulaire, ouverte vers le haut.

4. Vanne d'arrivée d'eau selon la revendication 1, **caractérisée en ce que** des moyens (4) pour empêcher un reflux en cas de dépression sont disposés dans la chambre de rotation (54).

5. Vanne d'arrivée d'eau selon la revendication 4, **caractérisée en ce que** les moyens (4) empêchant un reflux comportent une lèvre mobile (41) qui, dans la position de base, ferme sur le côté inférieur une autre chambre annulaire (60) ouverte vers l'extérieur.

6. Vanne d'arrivée d'eau selon la revendication 4, **caractérisée en ce que** les moyens (4) empêchant un reflux comportent une lèvre mobile (42) qui ferme la chambre de rotation (54) lorsque la soupape à membrane (50) est fermée et dans le cas d'une dépression.

7. Vanne d'arrivée d'eau selon la revendication 4, **caractérisée en ce que** les moyens (4) empêchant un reflux sont agencés sous la forme d'un clapet qui ferme la chambre de rotation (54) en direction de l'extérieur lorsque la soupape à membrane (50) est ouverte.

8. Vanne d'arrivée d'eau selon la revendication 4, **caractérisée en ce que** les moyens (4) empêchant un reflux sont agencés sous une forme annulaire avec un passage central (39).

9. Vanne d'arrivée d'eau selon la revendication 4, **caractérisée en ce que** les moyens (4) empêchant un reflux sont fixés avec un couvercle (3) sur le boîtier (8).

10. Vanne d'arrivée d'eau selon l'une des revendications 1 à 9, **caractérisée en ce que**, lorsque la soupape à membrane (50) est ouverte, la chambre de rotation (54) est reliée à un embout (23), qui peut être raccordé à une canalisation pour parfaire le remplissage d'un siphon.

11. Vanne d'arrivée d'eau selon l'une des revendications 1 à 10, **caractérisée en ce qu'**un canal annulaire de sortie (28) est disposé en aval de la chambre de rotation (54), dans la direction d'écoulement.

12. Vanne d'arrivée d'eau selon la revendication 11, **caractérisé en ce que** le canal de sortie (28) est disposé concentriquement à un tube d'entrée (17).
